# EUROPEAN PATENT APPLICATION

(11) **EP 0 878 384 A2**
(43) Date of publication of application: **18.11.1998**
(21) Application number: 98500059.5
(22) Date of filing: 02.03.1998
(51) Int. Cl.: B62K 9/02

(54) **Toy motorcycle**

(30) Priority: 11.04.1997 ES 9700941 U
(71) Applicant: Rodriguez Martinez, S.C., 03440 Ibi, Alicante (ES)
(72) Inventor: Rodriguez Ferre, José Manuel, 03440 IBI (Alicante) (ES)
(74) Representative: Canadell-Isern, Roberto

(57) **Abstract**

One part (2), as a chassis, serves as a base for a number of parts (3) to (58) which, when combined, comprise the overall structure of the motorcycle by means of a simple assembly process which can be performed by an adult, comprising a replica, as a whole, of the forms and functions of a real vehicle of the same type, to which end it includes a battery-powered electric motor, a speed-selector switch and a pedal-controlled brake.

This invention is applicable as a play vehicle to be driven by children of over three years of age.

## Description

The present invention refers to a toy motorcycle.

In this invention, a three-wheel motorcycle, two wheels of which are working rear wheels, in addition to a front, wheel used for steering, has been designed to be driven by a child over three years of age.

This motorcycle is equipped with electric d.c. motors powered by rechargeable batteries.

This vehicle is comprised of a main component in the form of a chassis to which different parts are attached to comprise the overall motorcycle structure by means of a simple assembly process which can be easily performed by an adult using basic tools and implements such as a screwdriver, a wrench, washers, nuts and bolts.

When assembled, the motorcycle is an exact replica of the formal and even functional aspects of an actual vehicle of the same type.

On the aforesaid chassis, a body elongated on the horizontal is mounted, configuring, at its front end, the play gasoline tank and, at its rear end, two recessed housings, one for holding the batteries, while the other holds a battery charger which can be plugged into the mains. These housings remain concealed and later enclosed by an upper part which comprises the motorcycle seat. The housings are readily accessed by an adult for the operation of recharging the batteries using the attached battery charger.

The unique design of this vehicle affords advantages including a remarkable simplification of the manufacturing process, which leads to a noticeable cut in costs, in addition to making these vehicles considerably sturdy, rugged and hard-wearing highly suitable for the use by children for which it is intended, thus lengthening the useful life thereof.

As has been previously mentioned hereinabove, this vehicle takes on the configuration of a three-wheel motorcycle equipped with a central body on which the seat in mounted, on which the child sits in a straddled position so as to be able to hold onto the handgrips for controlling the wheel used for steering the vehicle, resting his her right/left foot on the right and left footrests, on one of which the accelerator pedal, comprised of a push-button which makes the motor power supply circuit, is located.

In front of the seat, a convex body is shaped to represent the false fuel tank, which is equipped with a double-pole throwover switch used for the purpose of turning on one or both of the electric motors with which the vehicle is equipped for the purpose of setting the speeds.

On the same foot rest as the accelerator is the brake lever, with which the child performs an operation equivalent to the real one, having to take his/her foot off the accelerator and to press it down on the lever to slow down and stop the vehicle.

For the purpose of facilitating the explanation, a sheet of drawings is attached to this descriptive account on which one embodiment provided for illustrative purposes is shown.

On the drawings:

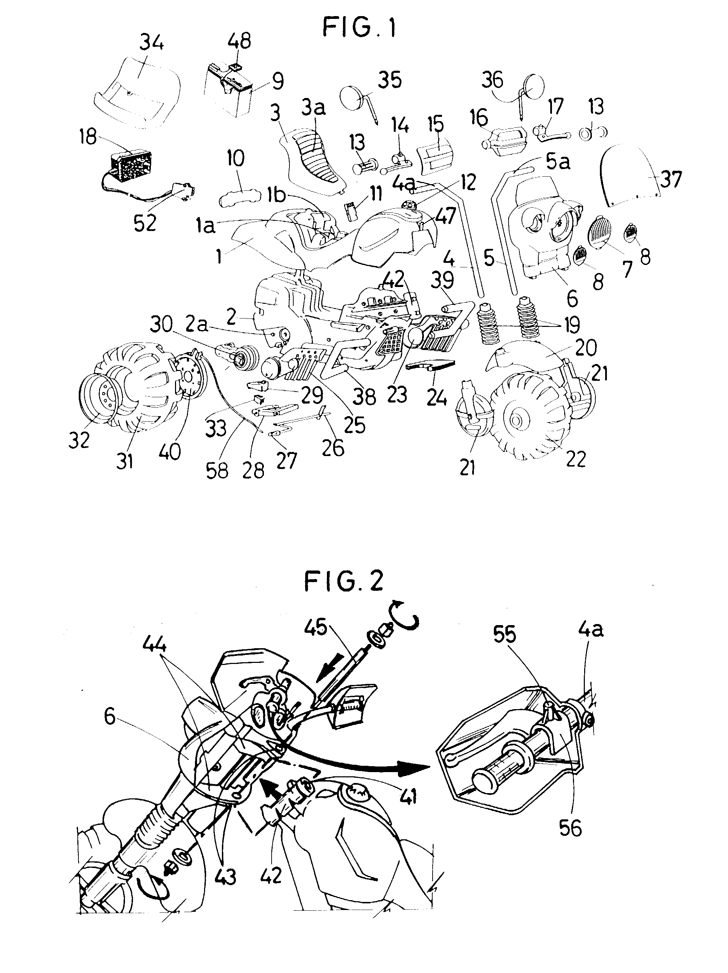

Fig. 1 is a perspective view of the disassembled motorcycle comprising the object of the invention.

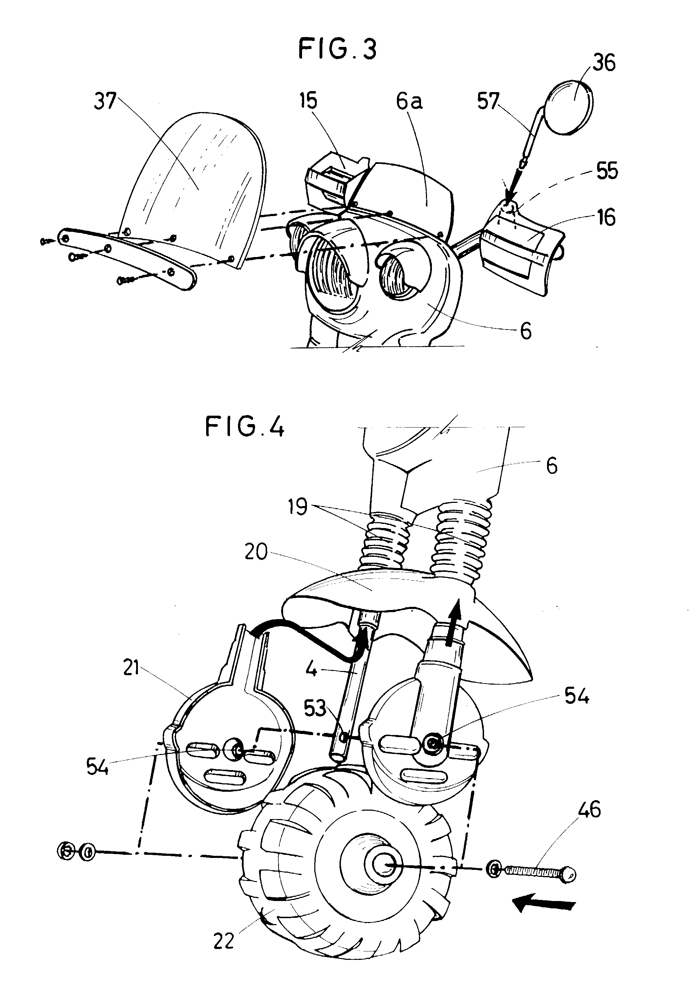

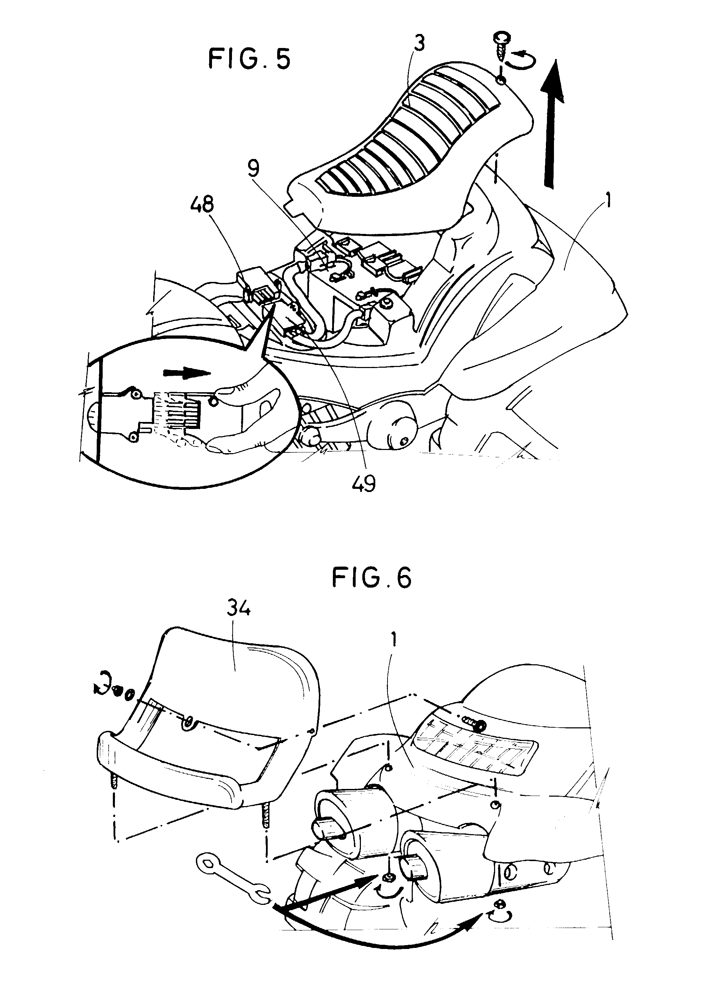

Figs. 2-6 each show perspectives related to as many additional stages of assembling the motorcycle.

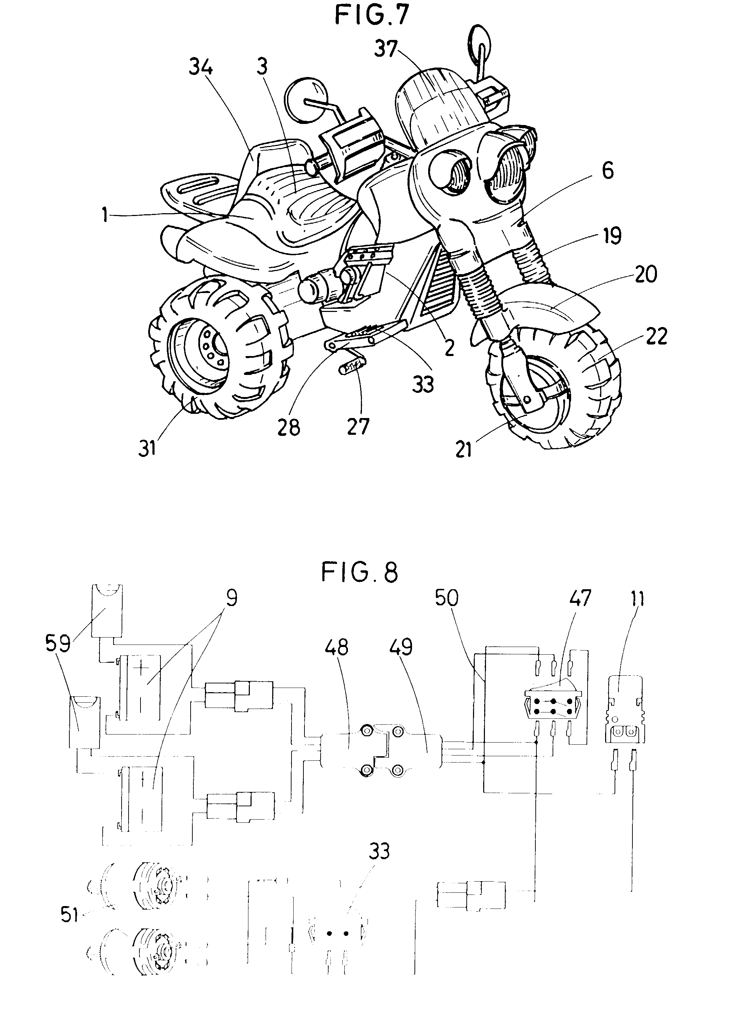

Fig. 7 is a perspective view of the fully-assembled motorcycle.

Fig. 8 provides a diagram of the electrical circuit of the vehicle.

Referring to the Figures, one finds a toy motorcycle apt for being driven by a child and comprised basically of the parts listed in following:
1. Gasoline tank.
2. Body.
3. Seat.
4. Right fork tube.
5. Left fork tube.
6. Cowling.
7. Large front headlight.
8. Small front headlight.
9. Battery.
10. Rear light.
11. Cutout switch.
12. Gas tank cap.
13. Handgrips.
14. Right handle bar.
15. Right handgrip guard.
16. Left handgrip guard.
17. Left handle bar.
18. Battery charger.
19. Front suspension.
20. Front mudguard.
21. Front fork tube hubcap.
22. Front wheel with lug piece.
23. Left motor trim.
24. Left footrest.
25. Right motor trim.
26. Brake axle.
27. Brake lever caps.
28. Right footrest.
29. Accelerator pedal.
30. Electric motor and transmission frame.
31. Rear wheel with lug piece.
32. Rear tire.
33. Accelerator push-button.
34. Short luggage carrier.
35. Right rearview mirror.
36. Left rearview mirror.
37. Windshield glass.
38. Right side guard.
39. Left side guard.
40. Brake disc.

This motorcycle is comprised of a main part -2- which is a replica of the shape of the false engine block, serving the purpose of a chassis onto which practically all of the other parts comprising the motorcycle are attached. Above part -2-, a second part -1- is attached, which, on the front end thereof, simulates the gas tank, equipped with a false cap - 12-. At the rear end, part -1- is shaped into two recesses - 1a- and -1b-, the first of which is used for housing the batteries -9-, while the second one holds the battery charger -18-. These recesses are enclosed with part -3-, which is shaped in the form of an elongated seat provided with a non-slip surface -3a-.

Part -2- is equipped with a cylindrical overhang -42- in the form of a bushing with a linear pitch -41-, which, on being aligned with the holes -43- in the flanges -44- on part -6- comprising the cowling, comprise an opening for the shaft -45- of the front fork comprised of tubes -4- and -5-, which are inserted into some holes on the aforesaid flanges -44-.

The tubes -4- and -5- each form similar recesses at the top thereof which comprise two aligned horizontal sections-4a- and -5a- on which the handle bars -14- and -17-, handgrip guards -15- and -16- and handgrips -13- are attached. To sections -4a- and -5a-, some parts -56- are attached which are provided with a sleeve -55-, into which the stems -57- of the rearview mirrors -35- and -36 are inserted.

The aforesaid tubes -4- and -5- entail the corrugated tube parts -19- which comprise the front suspension. The bottom ends of the tubes -4- and -5- are provided with holes -53- which, on being aligned with the lug piece on the front wheel -22- and with the holes -54- in the hubcaps -21- of the aforesaid forks, comprise an opening through which the axle-46- of the wheel fits.

The electric d.c. motors -51-, in conjunction with the transmission box are incorporated into a frame -30- which is fit into housings -2a- located in the sides of part -2-.

A brake mechanism -40- actuated by lever -26-, pedal-27- and cable -58- acts on the back working wheels marked - 31- and equipped with tire -32-.

The accelerator pedal -29- acts on the push-button -33- which makes the electrical circuit, allowing the electrical current to flow from the battery to the motor.

A double-pole throwover switch -47- affords the possibility of selecting the vehicle speeds.

The cowling -6- has a surface -6a- with holes for supporting and holding a windshield -37-.

The battery -9- is equipped with a plug -48- for inserting it into a plug -49- in the wiring -50- of the motor -51- and also for plugging in the plug -52- of the battery charger -18-.

The battery -9- is equipped with a plug -48- for inserting it into the wiring -50- of the motor -51- while the motorcycle is in use and also for inserting it into the plug -52- of the charger -18- during the battery recharging process.

The electrical circuit includes a cutout switch -11- which comprises a thermal protector against high power consumption and which can be automatically reset, in addition to fuses -59- to protect against possible short circuits.

## Claims

1. Toy motorcycle of the type which entails a minimum of a battery-powered electric motor, a pedal which acts on a push-button to make the electrical circuit for the motor to run, a speed-selector switch and a pedal-controlled brake, **characterized** essentially by being comprised of a number of molded plastic parts designed to be assembled for the purpose of comprising the overall frame of the vehicle, there being a main part (2) which is a replica of the formal aspect of the false motor block, which serves as a chassis to which practically all of the other parts are attached, on the top of which a second, elongated part (1) runs in the shape of a shell with the concave part downward, which at the front end is noticeable convex to simulate the fuel tank covered with a cap (12), while the rear part is shaped into two stepped recesses (1a) and (1b), one of which is for housing the batteries (9) while the other holds a battery charger (18), being kept closed at the top by a cover part (3) which can eventually be removed and which is provided on the reverse side thereof with an elongated surface (3a) ribbed crosswise which comprises the seat.

2. Toy motorcycle as per Claim 1, **characterized** because part (2) is provided with a vertically-positioned cylindrical overhang (42) at the top part of the front which serves as a bushing, with a linear pitch (41) aligned with the holes 843) on each of the flanges (44) provided in the cowling (6), on the back thereof, serving as an opening through which the drive shaft (45) fits.

3. Toy motorcycle as per Claims 1 and 2, **characterized** because the flanges (44) of part (6) of the cowling each have aligned holes through which tubes (4) and (5) comprising the front fork fit, to the upper ends of the handle bars (14) and (17), the handgrip guards (15) and (16), the handgrips (13) and the rearview mirrors (35) and (36) are attached.

4. Toy motorcycle as per Claims 1 through 3, **characterized** because tubes (4) and (5) entail corrugated casings (19) which comprise the front suspension, each one of the lower ends of said tubes having crosswise holes (53) aligned with the lug piece on the front wheel (22) and with the holes (54) in the hubcaps (21) of the aforementioned forks, through which the wheel axle (46) fits.

5. Toy motorcycle as per Claims 1 through 4, **characterized** because part (2) has recesses (2a) at the lower rear part of the side for hooking up the respective electric motors (51) and transmission, inside their pertinent frames (30) for driving the working wheels (31) by means of a switch (47), a speed selector and push-button (33) actuated by the accelerator pedal (29).

6. Toy motorcycle as per Claims 1 through 5, **characterized** because the battery (9) is fitted with a plug (48) for optionally inserting into a plug (49) in the wiring (50) of the motor (51) and for plugging the battery charger (18) into an outlet (52).
